# EUROPEAN PATENT SPECIFICATION

(11) **EP 3 822 118 B1**
(45) Date of publication and mention of the grant of the patent: **30.08.2023**
(21) Application number: 19209691.5
(22) Date of filing: 18.11.2019
(51) Int. Cl.: B60P 1/64

(54) **A HOOKLIFT ARRANGEMENT, A VEHICLE, AND A METHOD IN RELATION THERETO**
HAKENLIFTANORDNUNG, FAHRZEUG UND VERFAHREN IN ZUSAMMENHANG DAMIT
AGENCEMENT DE LEVAGE À CROCHET, VÉHICULE ET PROCÉDÉ ASSOCIÉ

(43) Date of publication of application: 19.05.2021
(73) Proprietor: Hiab AB, 164 22 Kista (SE)
(72) Inventor: HYTTINEN, Hannu, 23800 Laitila (FI)
(74) Representative: Bjerkén Hynell KB

(56) References cited:
- EP-A1- 0 634 304
- EP-A1- 2 570 301
- EP-A1- 3 141 420
- US-A1- 2010 154 399

## Description

### Technical field

The present disclosure relates to a hooklift arrangement, a vehicle, and a method in relation thereto, that particularly are configured to improve operation when loading a load carrying object to the vehicle.

### Background

A vehicle may be equipped with different working equipment, such as a hooklift (also called a demountable), to perform certain working tasks such as loading and unloading of objects to and from the vehicle. With a hooklift mounted on a vehicle (e.g. a truck), the vehicle may load and unload various load carrying objects like flatracks, dumpster bodies, and similar containers. Various applications within waste-handling, recycling, scrap and demolition industries are then available.

Normally, the hooklift comprises a hydraulic system usually comprising one or two double-acting lifting cylinders operating the loading and the unloading of load carrying objects. The lifting cylinder(s) are used to position the hook in relation to the load carrying object and further to lift and pull the load onto the truck during loading and also to lift and push it off the truck during unloading.

During a loading sequence, the vehicle is positioned such that the longitudinal axis of the truck essentially is aligned with the longitudinal axis of the load carrying object to be loaded. The hooklift is then lowered from the parked position to an operation position and the hook on the hooklift is engaged with a bar, or other type of connection means, on the load carrying object. Once the hook and bar is engaged the lifting cylinder(s) of the hooklift is activated such that it lifts one end of the load carrying object and pulls it onto rollers on the back of the truck until it is in a loaded position on the truck and ready for transport to a new position.

In the following some documents that disclose related solutions will be briefly discussed.

US4911318A discloses a vehicle provided with a hooklift structured to be attached to one end of a flatrack in order to lift it up. To avoid dragging the flatrack across the ground, the vehicle is put into reverse and backed up whilst the lifthook is retracted. The flatrack then moves on vehicle-mounted skid plates.

US4153169A discloses a vehicle mounted with a lifter mechanism that lifts one end of a container to let the vehicle back into the space beneath the container, and the container can then be lowered onto the vehicle bed. The lifter mechanism is mounted to a horizontally movable carriage on the vehicle bed. During reverse motion the carriage is motionless. US20160016500A1 discloses how a truck provided with a winch raises a tank from horizontal to vertical by backing up the truck.

US10131264A1 discloses a similar vehicle-mounted hooklift construction that uses a single cylinder.

EP2570301 discloses a method for lowering a tipping frame of a hooklift which requires very little energy.

A problem with the current loading sequence is that it is relatively slow, due to the capacity of the hydraulic system operating the lifting cylinder in combination with the, normally quite heavy, load carrying object. Further, the presently applied loading sequence requires quite a lot of energy for driving the loading movements of the lifting cylinders.

An object of the present invention is to achieve a hooklift arrangement, a vehicle, and a method that eliminates, or at least mitigates, the above problems with the presently used technique.

### Summary

The above-mentioned object are achieved by the present invention according to the independent claims.

Preferred embodiments are set forth in the dependent claims.

A first aspect of the present invention relates a hooklift arrangement (2) for loading a load carrying object (4) onto a vehicle (6), and structured to be mounted to the vehicle. The hooklift arrangement (2) comprising:
- a movable arm (8) arranged to pivot around an axis parallel to the plane of the chassis of the vehicle, from a first position, where a first engagement member (10), attached to the movable arm (8), is structured to be engaged to a second engagement member (12) attached to the load carrying object (4), to a second position, corresponding to a position where an engaged load carrying object (4) is fully loaded on to the vehicle (6),
- at least one hydraulic double-acting cylinder (14) attached to the movable arm (8), the cylinder (14) being operable in an active operation mode, wherein the piston rod of the cylinder controls the movement of the movable arm (8), and in a passive operation mode, wherein the movable arm (8) controls the movement of the piston rod of the cylinder (14),
- a sensor system (16) configured to determine positions of the movable arm (8) and/or the load carrying object (4) in relation to the vehicle (6), and to determine a position signal (18) in dependence thereto,
- a control system (20) configured to receive said position signal (18), and to determine and generate control signals (22) controlling the operation of the cylinder (14), and of the vehicle (6).

The control system (20) is configured to, during loading of a load carrying object (4), determine, based upon the position signal (18), that a predetermined part (24) of the load carrying object (4) has been lifted higher than a predetermined level L being defined for passive operation mode of the cylinder (14), and, in response to that the load carrying object (4) has been lifted higher than said predetermined level L, the control system (20) is further configured to generate control signals (22) for changing the operation mode of the cylinder (14) from an active operation mode to a passive operation mode, and to the vehicle (6) for moving the vehicle (6) towards the load carrying object (4), such that said movement of the vehicle (6) moves the load carrying object (4) on to the vehicle (6).

According to one embodiment of the hooklift arrangement (2), specifically during the movement of the vehicle (6) towards the load carrying object (4), the control system (20) is further configured to evaluate the position of the load carrying object (4) in relation to the vehicle (6), and to compare the position to a predetermined position in relation to the vehicle (6), and wherein, when the load carrying object (4) has reached said predetermined position, the control system (20) is configured to change operation mode of the cylinder (14) from the passive operation mode to the active operation mode and finish the loading of the load carrying object (4).

This mode of operation change is advantageous in order to smoothly finish the loading procedure.

A second aspect of the present invention relates to a vehicle comprising a hooklift arrangement. The vehicle is provided with essentially the corresponding features as been described above.

A third aspect of the present invention relates to a method of a hooklift arrangement, or of a vehicle. The hooklift arrangement and the vehicle are described above. The method comprises:
- determining, during loading of a load carrying object, based upon the position signal, that a predetermined part of the load carrying object has been lifted higher than a predetermined level L being defined for passive operation mode of the cylinder, and, in response to that the load carrying object has been lifted higher than said predetermined level L,
- generating control signals for changing the operation mode of the cylinder from an active operation mode to a passive operation mode,
- generating control signals to the vehicle for moving the vehicle towards the load carrying object, and
- moving the vehicle such that the load carrying object moves on to the vehicle.

According to one embodiment, during the movement of the vehicle towards the load carrying object, the method comprises:
- evaluating the position of the load carrying object in relation to the vehicle,
- comparing the position to a predetermined position in relation to the vehicle, and wherein, when the load carrying object has reached said predetermined position,
- changing operation mode of the cylinder from the passive operation mode to the active operation mode, and
- finishing the loading of the load carrying object.

Advantageously, by applying a loading sequence performed by the hooklift arrangement, the vehicle and the method according to the present invention, the loading is done faster in comparison to the presently applied loading procedures. The loading time can be shortened considerably by actively controlling the loading by moving the vehicle in a reverse direction instead of actively using the hooklift for lifting, i.e. the lifting cylinder is set in a passive operation mode. As the vehicle may be used in up to approximately 2/3 of the total loading operation this offer a considerable reduction in the total time required for loading. In addition, the loading is further done in a more energy efficient manner.

### Brief description of the drawings

Figure 1 is a block diagram that schematically illustrates a hooklift arrangement according to a first aspect of the present invention.
Figure 2 is a block diagram that schematically illustrates a vehicle according to a second aspect of the present invention.
Figures 3-8 are schematic illustrations of a vehicle with a hooklift arrangement according to the present invention, during a loading procedure.
Figure 9 is a flow diagram of the method according to the present invention.

### Detailed description

The hooklift arrangement, the vehicle and the method in relation to the arrangement and vehicle will now be described in detail with references to the appended figures. Throughout the figures the same, or similar, items have the same reference signs. Moreover, the items and the figures are not necessarily to scale, emphasis instead being placed upon illustrating the principles of the invention.

As discussed above the invention is based on a loading sequence where the vehicle is not only used to position the hooklift next to the load carrying object, but also to actively take part when the load carrying object is loaded onto the vehicle.

The invention may be implemented as an assisted loading process, where instructions for a driver of the hooklift vehicle is generated. Further, the invention may of course also be implemented as an autonomous loading process, where instructions directly applied to the hooklift and/or the vehicle are generated. Some steps of the loading process may further be performed autonomously where as other steps are performed by assisting the driver of the hooklift vehicle with instructions.

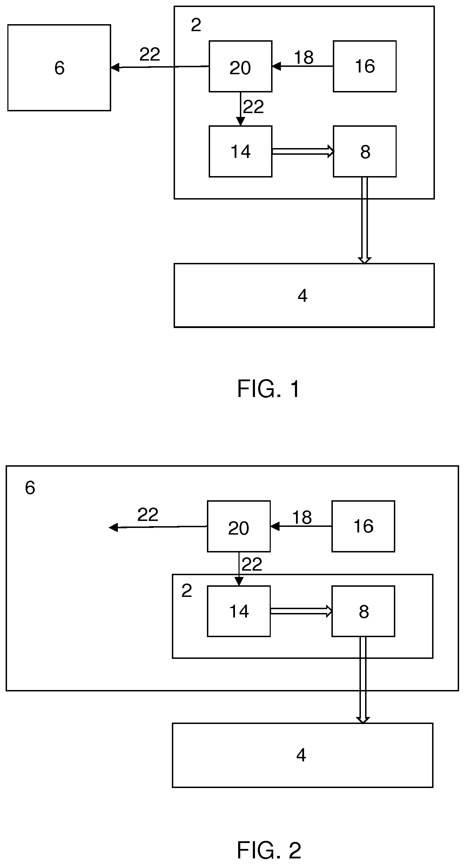

First with references to figure 1, and figures 3-8, a hooklift arrangement 2 is provided for loading a load carrying object 4 onto a vehicle 6. The load carrying object 4 may e.g. be flatracks, dumpster bodies, and similar containers. The hooklift arrangement is structured to be mounted to the vehicle.

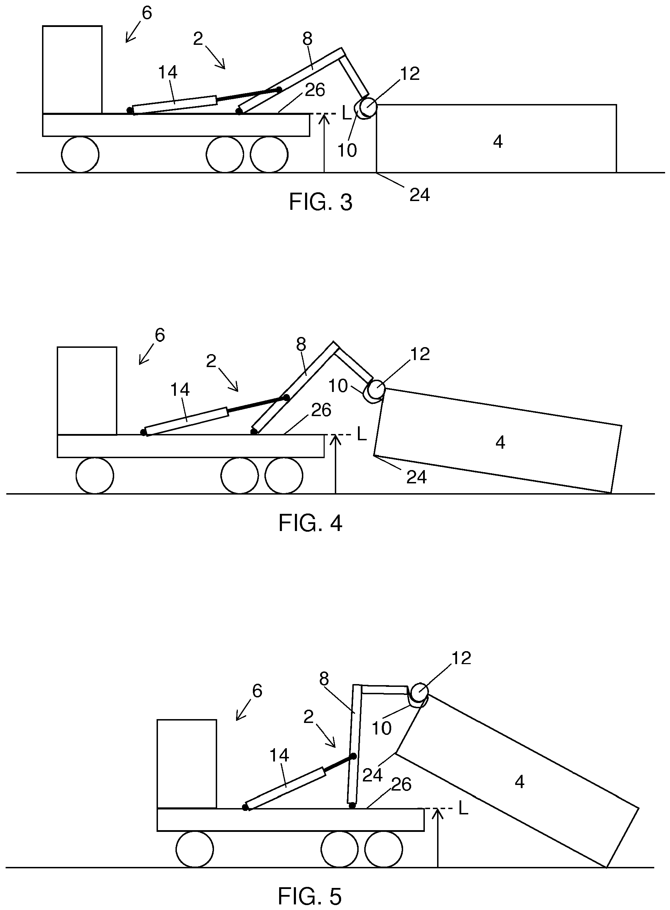

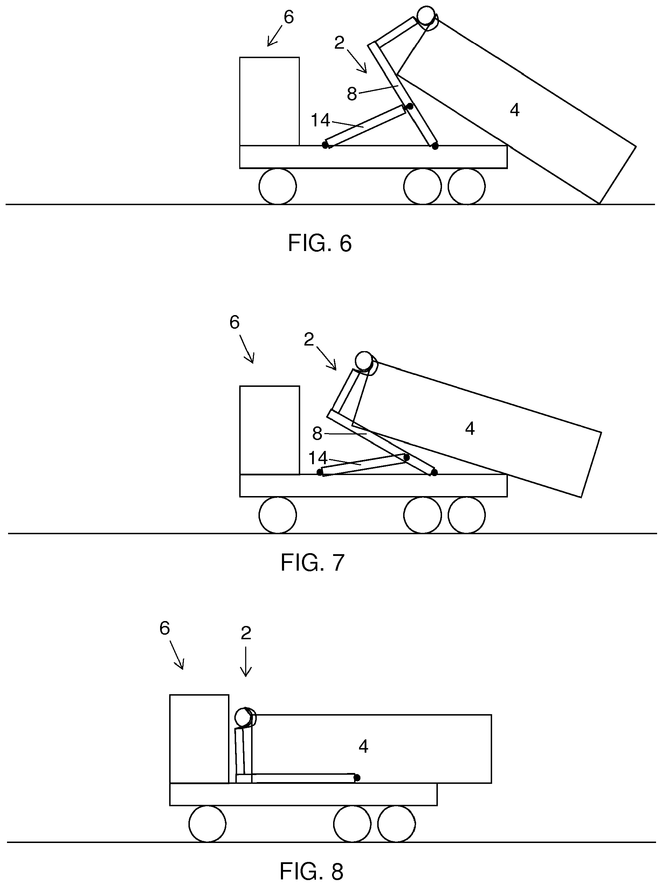

The hooklift arrangement 2 comprises a movable arm 8 arranged to pivot around an axis parallel to the plane of the chassis of the vehicle, from a first position, where a first engagement member 10, e.g. a hook, attached to the movable arm 8, is structured to be engaged to a second engagement member 12, e.g. a bar or similar, attached to the load carrying object 4, to a second position, corresponding to a position where an engaged load carrying object 4 is fully loaded on to the vehicle 6. The first position is illustrated in figure 3 and the second position is illustrated in figure 8 where the load carrying object is loaded onto the vehicle.

The hooklift arrangement further comprises at least one hydraulic double-acting cylinder 14 attached to the movable arm 8, and the cylinder 14 being operable in an active operation mode, wherein the piston rod of the cylinder controls the movement of the movable arm 8, and in a passive operation mode, wherein the movable arm 8 controls the movement of the piston rod of the cylinder 14.

Preferably, in the passive operation mode the hydraulics of the double-acting cylinder 14 is set to be in a so-called regenerative mode wherein the respective piston chamber and the piston rod chamber of the cylinder 14 are interconnected and in further connection with a tank of the hydraulic system through e.g. flow control valves. The flow control valves may be used to control the return flow to tank from the cylinder(s).

The hooklift arrangement also comprises a sensor system 16 configured to determine positions of the movable arm 8 and/or the load carrying object 4 in relation to the vehicle 6, and to determine a position signal 18 in dependence thereto.

The sensor system may comprise a plurality of different sensors arranged on the movable arm or otherwise on the hooklift arrangement, and/or sensors arranged on the vehicle. The determined position signal 18 may be generated from a single sensor unit or result from a plurality of sensor signals generated by a plurality of sensor units. Different types of sensors applicable herein will be further discussed below.

Furthermore, a control system 20 is also provided configured to receive the position signal 18, and to determine and generate control signals 22 controlling the operation of the cylinder 14, and of the vehicle 6. The control system 20 may comprise one or more processing units to support the determination and generation of control signals 22 for the controlling the operation of the hooklift 2 and vehicle 6. The control system may be decentralized, i.e. divided into several sub-control units, and is provided with one or many memory units. It is also provided with communication capabilities, both via physical connections and/or wireless connections.

The control system 20 is configured to, during loading of a load carrying object 4, determine, based upon the position signal 18, that a predetermined part 24 of the load carrying object 4 has been lifted higher than a predetermined level L being defined for passive operation mode of the cylinder 14. The predetermined level L is related to the dimensions of the vehicle and the load carrying object. The predetermined level L may be determined based on the specific load carrying object to be loaded or be set to a default value adapted to a generic load carrying object.

In response to that the load carrying object 4 has been lifted higher than the predetermined level L, which is illustrated in figure 5, the control system 20 is further configured to generate control signals 22 for changing the operation mode of the cylinder 14 from an active operation mode to a passive operation mode, and to the vehicle 6 for moving the vehicle 6 towards the load carrying object 4, such that said movement of the vehicle 6 moves the load carrying object 4 on to the vehicle 6. As illustrated in figures 4 and 5 the vehicle moves to the left in the figure.

When putting the cylinder(s) in the passive mode driving instructions for moving the vehicle in reverse is further issued. As the vehicle is moving towards the load carrying object, with the load carrying object at an angle to it, the vehicle will push itself under the load carrying object. The passive mode of the cylinder(s) effectively means that they are passive and that the force generated from the movement of the vehicle will affect the piston position and oil distribution without using the pump. The speed of the loading may be adjusted by the reversing speed of the vehicle. The loading procedure is clearly illustrated by the figures 3-8.

The vehicle and/or hooklift is typically equipped with sensors detecting moving and nonmoving objects, including the load carrying object to be loaded and the environment at least partly surrounding the vehicle. Examples of such sensors are LIDAR, 3D Cam, Cameras, Lasers, thermal cameras and radars. Common for these type of sensors is that they image or describe the surroundings with image data. Image data in this aspect being data organized in a matrix to describe the spatial relationship of the surrounding with respect to what the sensors are measuring.

In addition to imaging sensors, various sensors for gathering information about the current state of the vehicle and hooklift as well as its surrounding are available. Some examples of these are pressure sensors in the lifting cylinder of the hooklift, sensors for estimating the weight of the load carrying object, the center of mass of the load carrying object etc. Other sensors, like sensors for measuring a tilting angle or position of a part of the hooklift in relation to a reference point, may be used to estimate the angle of the hooklift arm and hence also the location of the arm and a load carrying object engaged to the hook of the arm.

An operation instruction in the control signal 22 may be an instruction for any type of movement of the hooklift or vehicle, or sequence of movements. It may e.g. be for driving the vehicle in forward direction or in reverse, activating the breaks of the vehicle, or for lowering or raising the hook of the hooklift. The operation instructions are managed and generated by the control system(s) of the vehicle and/or hooklift. The control system of the hooklift and the control system of the vehicle are communicating and the control system of the hooklift may generate and communicate driving instructions for the vehicle to the control system of the vehicle, and vice versa. The control system is also configured to determine and generate control signals applicable both if the vehicle and/or hooklift is semi-automatically and/or automatically operated. In the semi-automatic operation the control signal may be determined in dependence of instructions generated by an operator.

The predetermined level L defined for change to passive operation mode of the cylinder, is a level where a lower edge 24 of a lifted part of the load carrying object 4 is above the level of the plane of a loading part 26 of the vehicle 6 whereto the load carrying object 4 is to be loaded, and wherein during movement of the vehicle 6 the loading part 26 moves below at least a part of the load carrying object 4.

According to one embodiment of the present invention, the control system 20 is further configured to, during the movement of the vehicle 6 towards the load carrying object 4, evaluate the position of the load carrying object 4 in relation to the vehicle 6, and to compare the position to a predetermined position in relation to the vehicle 6. When the load carrying object 4 has reached the predetermined position, the control system 20 is configured to change operation mode of the cylinder 14 from the passive operation mode to the active operation mode and finish the loading of the load carrying object 4.

The predetermined position of the load carrying object 4 for change to active operation mode of the cylinder 14 is preferably a position where the load carrying object 4 is about to completely leave the ground, which is illustrated in figure 6 and in figure 7 the load carrying object 4 has completely left the ground.

According to one embodiment the position indicating that the load carrying object 4 is about to completely leave the ground is defined by one or many of the angle of the movable arm 8, image data depicting the load carrying object 4 and its position relative to the ground, and the relative position of the load carrying object 4 to a reference point on the vehicle 6 such as rear rollers. Rear rollers may be provided on the back edge of the loading part 26 of the vehicle on which rollers the load carrying object rolls during the loading procedure.

In addition, the position of the load carrying object and then changing of the mode may also be indirectly determined by monitoring the pressures/forces of the hydraulic cylinder(s). The control system may for example then determine pressure values when it is safe and possible to change from active to passive mode and also to determine the position when the load carrying object is hitting the rollers and starts to leave the ground. Operational mode changes may also be based upon cylinder force by using passive mode when the forces are on levels where the vehicle has the possibility to perform the loading sequence. It would then be possible to combine cylinder position and speed monitoring such that the control system is adapted to apply the fastest and/or most economic loading sequence.

With references to the schematic block diagram shown in figure 2, the present invention also relates to a vehicle 6 comprising a hooklift arrangement 2 for loading a load carrying object onto the vehicle, where the hooklift arrangement 2 is structured to be mounted to the vehicle 6. The vehicle will also be described with references to figures 3-8. The following description of the vehicle is similar to the above description of the hooklift arrangement and it is also referred to that description if applicable.

The vehicle comprises a movable arm 8 arranged to pivot around an axis parallel to the plane of the chassis of the vehicle 6, from a first position, where a first engagement member 10, attached to the movable arm 8, is structured to be engaged to a second engagement member 12 attached to the load carrying object 4, to a second position, corresponding to a position where an engaged load carrying object 4 is fully loaded on to the vehicle 6.

At least one hydraulic double-acting cylinder 14 is provided and is attached to the movable arm 8. The cylinder 14 is operable in an active operation mode, wherein the piston rod of the cylinder controls the movement of the movable arm 8, and in a passive operation mode, wherein the movable arm 8 controls the movement of the piston rod of the cylinder.

The vehicle 6 further comprises a sensor system 16 configured to determine positions of the movable arm 8 and/or the load carrying object 4 in relation to the vehicle 6, and to determine a position signal 18 in dependence thereto. The sensor system may comprise a plurality of different sensors arranged e.g. at the movable arm or at the vehicle. Examples of applicable sensors are given above in relation to the description of the hooklift arrangement.

The vehicle further comprises a control system 20 configured to receive the position signal 18, and to determine and generate control signals 22 controlling the operation of the cylinder 14, and of the vehicle 6. The control system 20 may comprise one or more processing units to support the determination and generation of control signals 22 for the controlling the operation of the hooklift 2 and vehicle 6. The control system may be decentralized, i.e. divided into several sub-control units, and provided with one or many memory units. It is also provided with communication capabilities, both via physical connections and/or wireless connections.

The control system 20 is configured to, during loading of a load carrying object 4, determine, based upon the position signal 18, that a predetermined part 24 of the load carrying object 4 has been lifted higher than a predetermined level L being defined for passive operation mode of the cylinder 14. In response to that the load carrying object 4 has been lifted higher than the predetermined level L, the control system 20 is further configured to generate control signals 22 for changing the operation mode of the cylinder 14 from an active operation mode to a passive operation mode, and to the vehicle 6 for moving the vehicle towards the load carrying object 4, such that the movement of the vehicle 6 moves the load carrying object 4 on to the vehicle.

According to the invention the predetermined level L defined for change to passive operation mode of the cylinder 4, is a level where a lower edge 24 of a lifted part of the load carrying object 4 is above the level of the plane of a loading part 26 of the vehicle 6 whereto the load carrying object 4 is to be loaded. During movement of the vehicle 6 the loading part 26 moves below the load carrying object 4.

In still another embodiment, during the movement of the vehicle 6 towards the load carrying object 4, the control system 20 is further configured to evaluate the position of the load carrying object 4 in relation to the vehicle.

The control system then is configured to compare the position to a predetermined position in relation to the vehicle 6, and wherein, when the load carrying object 4 has reached the predetermined position, the control system 20 is configured to change operation mode of the cylinder 14 from the passive operation mode to the active operation mode and finish the loading of the load carrying object 4. The predetermined position of the load carrying object 4 for change to active operation mode of the cylinder 14 is preferably a position where the load carrying object 4 is about to completely leave the ground.

The position indicating that the load carrying object 4 is about to completely leave the ground is defined by one or many of the angle of the movable arm 8, image data depicting the load carrying object 4 and its position relative to the ground, and the relative position of the load carrying object 4 to a reference point on the vehicle 6 such as rear rollers.

The positions of the movable arm 8 may be determined by determining a pivoting angle of the movable arm.

According to one embodiment with regard to the double-acting cylinder. In the passive operation mode the hydraulics of the double-acting cylinder 14 is set to be in a regenerative mode wherein a respective piston chamber and a piston rod chamber of the cylinder are interconnected and in further connection with a tank of the hydraulic system through e.g. flow control valves.

The present invention also relates to a method of a hooklift arrangement or of a vehicle comprising a hooklift arrangement.

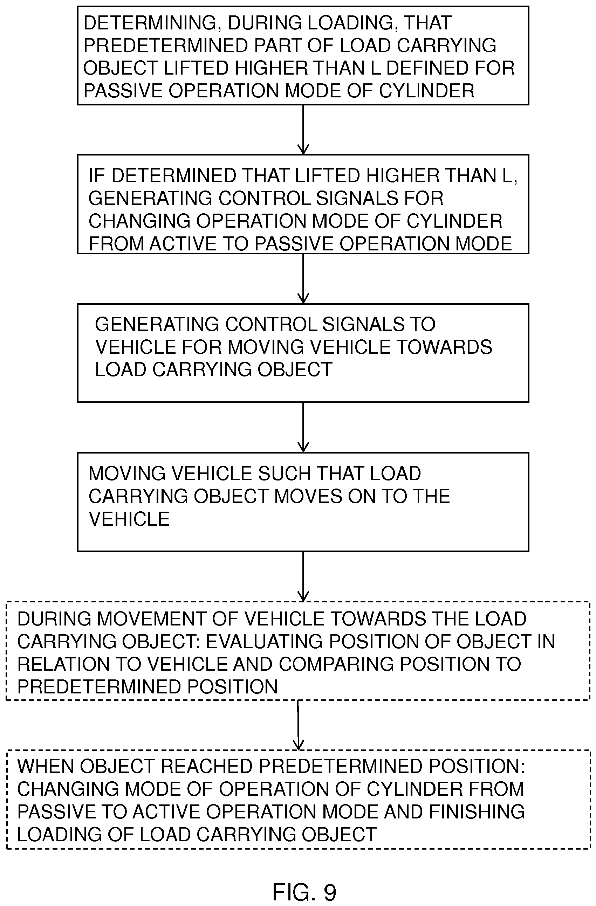

The method will now be described with references to the flow diagram shown in figure 9. In the flow diagram, optional method steps are included within dashed boxes. It should be noted that the method is specifically suitable to be implemented with the hooklift arrangement and the vehicle which have been described above and it is herein referred to that description.

Thus, a method is provided of a hooklift arrangement 2 for loading a load carrying object 4 onto a vehicle 6, and structured to be mounted to the vehicle, or a method is provided of a vehicle 6 comprising a hooklift arrangement 2. The hooklift arrangement 2 comprises a movable arm 8, at least one hydraulic double-acting cylinder 14 attached to the movable arm, a sensor system 16 and a control system 20. These systems and units have been described in detail above and it is referred to that description.

The method comprises:
- determining, during loading of a load carrying object, based upon the position signal, that a predetermined part of the load carrying object has been lifted higher than a predetermined level L being defined for passive operation mode of the cylinder, and, in response to that the load carrying object has been lifted higher than said predetermined level L,
- generating control signals for changing the operation mode of the cylinder from an active operation mode to a passive operation mode,
- generating control signals to the vehicle for moving the vehicle towards the load carrying object, and
- moving the vehicle such that the load carrying object moves on to the vehicle.

According to the invention the method further comprises that the predetermined level L defined for change to passive operation mode of the cylinder, is a level where a lower edge 24 of a lifted part of the load carrying object is above the level of the plane of a loading part 26 of the vehicle whereto the load carrying object is to be loaded. During movement of the vehicle the loading part moves below the load carrying object.

In another embodiment the method comprises, during the movement of the vehicle towards the load carrying object:
- evaluating the position of the load carrying object in relation to the vehicle,
- comparing the position to a predetermined position in relation to the vehicle, and wherein, when the load carrying object has reached said predetermined position,
- changing operation mode of the cylinder from the passive operation mode to the active operation mode, and
- finishing the loading of the load carrying object.

In the following an exemplary loading sequence is described with references to figures 3-8.

Figure 3 shows that the first engagement member 10 of the hooklift has been attached to the second engagement member 12 of the load carrying object 4.

Figure 4 shows that the loading has started by operating the cylinder(s) inwards; the truck is in neutral gear and handbrake is released, and the part of the load carrying object closest the vehicle is lifted and the opposite part remains on ground.

Figure 5 shows that the lower edge 24 of the load carrying object is above the predetermined level L, and the cylinder is now in the passive mode and the load carrying object and movable arm are moved by an external force, i.e. by reverse movement of the vehicle it "pushes" itself under the load carrying object. The reverse speed of the vehicle during loading may be automatically controlled by the control system of the hooklift arrangement. The transition point from the active operation mode to the passive operation mode, i.e. when the lower edge 24 is above L, may be determined by measuring the pivot angle of the movement arm 8, and comparing the pivot angle to a predefined angle representing when the lower edge being above L.

Figure 6 shows when the load carrying object is in the predetermined position, e.g. when the load carrying object meets the rear rollers, and the passive mode is transited to the active mode. This transition point may also be determined by measuring the pivoting angle and comparing it to a threshold angle.

Figure 7 shows that loading is continued in the active mode where the movable arm is operated by moving the cylinder(s) inwards.

Figure 8 shows when loading has been completed.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A hooklift arrangement (2) for loading a load carrying object (4) onto a vehicle (6), and structured to be mounted to the vehicle, the hooklift arrangement (2) comprising:
- a movable arm (8) arranged to pivot around an axis parallel to the plane of the chassis of the vehicle, from a first position, where a first engagement member (10), attached to the movable arm (8), is structured to be engaged to a second engagement member (12) attached to the load carrying object (4), to a second position, corresponding to a position where an engaged load carrying object (4) is fully loaded on to the vehicle (6),
- at least one hydraulic double-acting cylinder (14) attached to the movable arm (8), the cylinder (14) being operable in an active operation mode, wherein the piston rod of the cylinder controls the movement of the movable arm (8), and in a passive operation mode, wherein the movable arm (8) controls the movement of the piston rod of the cylinder (14),
- a sensor system (16) configured to determine positions of the movable arm (8) and/or the load carrying object (4) in relation to the vehicle (6), and to determine a position signal (18) in dependence thereto,
- a control system (20) configured to receive said position signal (18), and to determine and generate control signals (22) controlling the operation of the cylinder (14), and of the vehicle (6), and wherein said control system (20) is configured to, during loading of a load carrying object (4), determine, based upon the position signal (18), that a predetermined part (24) of the load carrying object (4) has been lifted higher than a predetermined level L being defined for passive operation mode of the cylinder (14), and, in response to that the load carrying object (4) has been lifted higher than said predetermined level L, the control system (20) is further configured to generate control signals (22) for changing the operation mode of the cylinder (14) from an active operation mode to a passive operation mode, and to the vehicle (6) for moving the vehicle (6) towards the load carrying object (4), such that said movement of the vehicle (6) moves the load carrying object (4) on to the vehicle (6), **characterized in that** said predetermined level L defined for change to passive operation mode of the cylinder, is a level where a lower edge (24) of a lifted part of the load carrying object (4) is above the level of the plane of a loading part (26) of the vehicle (6) whereto the load carrying object (4) is to be loaded, and wherein during movement of the vehicle (6) said loading part (26) moves below said lower edge (24) of the lifted part of said load carrying object (4).

2. The hooklift arrangement (2) according to claim 1, wherein, during said movement of the vehicle (6) towards the load carrying object (4), the control system (20) is further configured to evaluate the position of the load carrying object (4) in relation to the vehicle (6), and to compare the position to a predetermined position in relation to the vehicle (6), and wherein, when the load carrying object (4) has reached said predetermined position, the control system (20) is configured to change operation mode of the cylinder (14) from the passive operation mode to the active operation mode and finish the loading of the load carrying object (4).

3. The hooklift arrangement (2) according to claim 2, wherein said predetermined position of the load carrying object (4) for change to active operation mode of the cylinder (14) is a position where the load carrying object (4) is about to completely leave the ground.

4. The hooklift arrangement (2) according to claim 3, wherein said position indicating that the load carrying object (4) is about to completely leave the ground is defined by one or many of the angle of the movable arm (8), image data depicting the load carrying object (4) and its position relative to the ground, and the relative position of the load carrying object (4) to a reference point on the vehicle (6) such as rear rollers.

5. The hooklift arrangement (2) according to any of claims 1-4, wherein in the passive operation mode the hydraulics of the double-acting cylinder (14) is set to be in a regenerative mode wherein the respective piston chamber and the piston rod chamber of the cylinder (14) are interconnected and in further connection with a tank of the hydraulic system through e.g. flow control valves.

6. A vehicle (6) comprising a hooklift arrangement (2) according to any of claims 1-5.

7. A method of a hooklift arrangement (2) for loading a load carrying object (4) onto a vehicle (6), and structured to be mounted to the vehicle, or a method of a vehicle (6) comprising a hooklift arrangement (2), the hooklift arrangement (2) comprising:
- a movable arm (8) arranged to pivot around an axis parallel to the plane of the chassis of the vehicle (6), from a first position, where a first engagement member (10), attached to the movable arm (8), is structured to be engaged to a second engagement member (12) attached to the load carrying object (4), to a second position, corresponding to a position where an engaged load carrying object (4) is fully loaded on to the vehicle (6),
- at least one hydraulic double-acting cylinder (14) attached to the movable arm, the cylinder being operable in an active operation mode, wherein the piston rod of the cylinder controls the movement of the movable arm (8), and in a passive operation mode, wherein the movable arm (8) controls the movement of the piston rod of the cylinder (14),
- a sensor system (16) configured to determine positions of the movable arm (8) and/or the load carrying object (4) in relation to the vehicle (6), and to determine a position signal (18) in dependence thereto,
- a control system (20) configured to receive said position signal (18), and to determine and generate control signals (22) controlling the operation of the cylinder (14), and of the vehicle (6), wherein the method comprises:
- determining, during loading of a load carrying object, based upon the position signal, that a predetermined part of the load carrying object has been lifted higher than a predetermined level L being defined for passive operation mode of the cylinder, and, in response to that the load carrying object has been lifted higher than said predetermined level L,
- generating control signals for changing the operation mode of the cylinder from an active operation mode to a passive operation mode,
- generating control signals to the vehicle for moving the vehicle towards the load carrying object, and
- moving the vehicle such that the load carrying object moves on to the vehicle, **characterized in that** said predetermined level L defined for change to passive operation mode of the cylinder, is a level where a lower edge (24) of a lifted part of the load carrying object is above the level of the plane of a loading part (26) of the vehicle whereto the load carrying object is to be loaded, and wherein during movement of the vehicle said loading part moves below said load carrying object.

8. The method according to claim 7, wherein said predetermined level L defined for change to passive operation mode of the cylinder, is a level where a lower edge (24) of a lifted part of the load carrying object is above the level of the plane of a loading part (26) of the vehicle whereto the load carrying object is to be loaded, and wherein during movement of the vehicle said loading part moves below said load carrying object.

9. The method according to claim 7 or 8, wherein, during said movement of the vehicle towards the load carrying object, the method comprises:
- evaluating the position of the load carrying object in relation to the vehicle,
- comparing the position to a predetermined position in relation to the vehicle, and wherein, when the load carrying object has reached said predetermined position,
- changing operation mode of the cylinder from the passive operation mode to the active operation mode, and
- finishing the loading of the load carrying object.

## Patentansprüche

1. Hakenliftanordnung (2) zum Laden eines lasttragenden Gegenstands (4) auf ein Fahrzeug (6), die so strukturiert ist, dass sie an dem Fahrzeug montiert ist, wobei die Hakenliftanordnung (2) Folgendes umfasst:
- einen beweglichen Arm (8), der so angeordnet ist, dass er um eine Achse parallel zur Ebene des Fahrgestells des Fahrzeugs drehbar ist, und zwar von einer ersten Position, in der ein erstes Eingriffselement (10), das an dem beweglichen Arm (8) angebracht ist, so strukturiert ist, dass es mit einem zweiten Eingriffselement (12), das an dem lasttragenden Gegenstand (4) angebracht ist, in Eingriff gebracht werden kann, in eine zweite Position, die einer Position entspricht, in der ein in Eingriff gebrachter lasttragender Gegenstand (4) vollständig auf das Fahrzeug (6) geladen ist,
- wenigstens einen an dem beweglichen Arm (8) angebrachten doppeltwirkenden Hydraulikzylinder (14), wobei der Zylinder (14) in einem aktiven Betriebsmodus, in dem die Kolbenstange des Zylinders die Bewegung des beweglichen Arms (8) steuert, und in einem passiven Betriebsmodus, in dem der bewegliche Arm (8) die Bewegung der Kolbenstange des Zylinders (14) steuert, betreibbar ist,
- ein Sensorsystem (16), das dafür ausgelegt ist, Positionen des beweglichen Arms (8) und/oder des lasttragenden Gegenstands (4) in Bezug auf das Fahrzeug (6) zu bestimmen und in Abhängigkeit davon ein Positionssignal (18) zu bestimmen,
- ein Steuerungssystem (20), das dafür ausgelegt ist, das Positionssignal (18) zu empfangen und Steuersignale (22) zu bestimmen und zu erzeugen, die den Betrieb des Zylinders (14) und des Fahrzeugs (6) steuern, und wobei das Steuerungssystem (20) dafür ausgelegt ist, während des Ladens eines lasttragenden Gegenstands (4) auf der Grundlage des Positionssignals (18) zu bestimmen, dass ein vorbestimmter Teil (24) des lasttragenden Gegenstands (4) höher als ein vorbestimmtes Niveau L angehoben wurde, das für den passiven Betriebsmodus des Zylinders (14) definiert wurde, und wobei das Steuerungssystem (20) ferner dafür ausgelegt ist, als Reaktion darauf, dass der lasttragende Gegenstand (4) höher als das vorbestimmte Niveau L angehoben wurde, Steuersignale (22) zum Ändern des Betriebsmodus des Zylinders (14) von einem aktiven Betriebsmodus zu einem passiven Betriebsmodus und an das Fahrzeug (6) zum Bewegen des Fahrzeugs (6) in Richtung des lasttragenden Gegenstands (4) zu erzeugen, sodass die Bewegung des Fahrzeugs (6) den lasttragenden Gegenstand (4) auf das Fahrzeug (6) bewegt,
**dadurch gekennzeichnet, dass** das vorbestimmte Niveau L, das zum Wechsel in den passiven Betriebsmodus des Zylinders definiert wurde, ein Niveau ist, bei dem sich eine Unterkante (24) eines angehobenen Teils des lasttragenden Gegenstands (4) oberhalb des Niveaus der Ebene eines Ladeteils (26) des Fahrzeugs (6) befindet, auf den der lasttragende Gegenstand (4) geladen werden soll, und wobei sich während der Bewegung des Fahrzeugs (6) der Ladeteil (26) unter die Unterkante (24) des angehobenen Teils des lasttragenden Gegenstands (4) bewegt.

2. Hakenliftanordnung (2) nach Anspruch 1, wobei während der Bewegung des Fahrzeugs (6) in Richtung des lasttragenden Gegenstands (4) das Steuerungssystem (20) ferner dafür ausgelegt ist, die Position des lasttragenden Gegenstands (4) in Bezug auf das Fahrzeug (6) zu beurteilen und die Position mit einer vorbestimmten Position in Bezug auf das Fahrzeug (6) zu vergleichen, und wobei, wenn der lasttragende Gegenstand (4) die vorbestimmte Position erreicht hat, das Steuerungssystem (20) dafür ausgelegt ist, den Betriebsmodus des Zylinders (14) vom passiven Betriebsmodus in den aktiven Betriebsmodus zu ändern und das Laden des lasttragenden Gegenstands (4) zu beenden.

3. Hakenliftanordnung (2) nach Anspruch 2, wobei die vorbestimmte Position des lasttragenden Gegenstands (4) für den Wechsel in den aktiven Betriebsmodus des Zylinders (14) eine Position ist, in der der lasttragende Gegenstand (4) dabei ist, den Boden vollständig zu verlassen.

4. Hakenliftanordnung (2) nach Anspruch 3, wobei die Position, die anzeigt, dass der lasttragende Gegenstand (4) dabei ist, den Boden vollständig zu verlassen, durch eines oder mehreres von Folgendem definiert wird: den Winkel des beweglichen Arms (8), Bilddaten, die den lasttragenden Gegenstand (4) und seine Position relativ zum Boden darstellen, und die relative Position des lasttragenden Gegenstands (4) in Bezug auf einen Bezugspunkt an dem Fahrzeug (6), wie z. B. hintere Rollen.

5. Hakenliftanordnung (2) nach einem der Ansprüche 1 bis 4, wobei im passiven Betriebsmodus die Hydraulik des doppeltwirkenden Zylinders (14) in einen regenerativen Modus versetzt ist, in dem der jeweilige Kolbenraum und der Kolbenstangenraum des Zylinders (14) miteinander verbunden sind und z. B. über Durchflusssteuerventile in weiterer Verbindung mit einem Tank des Hydrauliksystems stehen.

6. Fahrzeug (6), umfassend eine Hakenliftanordnung (2) nach einem der Ansprüche 1 bis 5.

7. Verfahren für eine Hakenliftanordnung (2) zum Laden eines lasttragenden Gegenstands (4) auf ein Fahrzeug (6), die so strukturiert ist, dass sie an dem Fahrzeug montiert ist, oder Verfahren für ein Fahrzeug (6), das eine Hakenliftanordnung (2) umfasst, wobei die Hakenliftanordnung (2) Folgendes umfasst:
- einen beweglichen Arm (8), der so angeordnet ist, dass er um eine Achse parallel zur Ebene des Fahrgestells des Fahrzeugs drehbar ist, und zwar von einer ersten Position, in der ein erstes Eingriffselement (10), das an dem beweglichen Arm (8) angebracht ist, so strukturiert ist, dass es mit einem zweiten Eingriffselement (12), das an dem lasttragenden Gegenstand (4) angebracht ist, in Eingriff gebracht werden kann, in eine zweite Position, die einer Position entspricht, in der ein in Eingriff gebrachter lasttragender Gegenstand (4) vollständig auf das Fahrzeug (6) geladen ist,
- wenigstens einen an dem beweglichen Arm angebrachten doppeltwirkenden Hydraulikzylinder (14), wobei der Zylinder in einem aktiven Betriebsmodus, in dem die Kolbenstange des Zylinders die Bewegung des beweglichen Arms (8) steuert, und in einem passiven Betriebsmodus, in dem der bewegliche Arm (8) die Bewegung der Kolbenstange des Zylinders (14) steuert, betreibbar ist,
- ein Sensorsystem (16), das dafür ausgelegt ist, Positionen des beweglichen Arms (8) und/oder des lasttragenden Gegenstands (4) in Bezug auf das Fahrzeug (6) zu bestimmen und in Abhängigkeit davon ein Positionssignal (18) zu bestimmen,
- ein Steuerungssystem (20), das dafür ausgelegt ist, das Positionssignal (18) zu empfangen und Steuersignale (22) zu bestimmen und zu erzeugen, die den Betrieb des Zylinders (14) und des Fahrzeugs (6) steuern, wobei das Verfahren Folgendes umfasst:
- Bestimmen, während des Ladens eines lasttragenden Gegenstands, auf der Grundlage des Positionssignals, dass ein vorbestimmter Teil des lasttragenden Gegenstands höher als ein vorbestimmtes Niveau L angehoben wurde, das für den passiven Betriebsmodus des Zylinders definiert wurde, und als Reaktion darauf, dass der lasttragende Gegenstand höher als das vorbestimmte Niveau L angehoben wurde,
- Erzeugen von Steuersignalen zum Ändern des Betriebsmodus des Zylinders von einem aktiven Betriebsmodus in einen passiven Betriebsmodus,
- Erzeugen von Steuersignalen für das Fahrzeug zum Bewegen des Fahrzeugs in Richtung des lasttragenden Gegenstands, und
- Bewegen des Fahrzeugs, sodass sich der lasttragende Gegenstand auf das Fahrzeug bewegt,
**dadurch gekennzeichnet, dass** das vorbestimmte Niveau L, das zum Wechsel in den passiven Betriebsmodus des Zylinders definiert wurde, ein Niveau ist, bei dem sich eine Unterkante (24) eines angehobenen Teils des lasttragenden Gegenstands oberhalb des Niveaus der Ebene eines Ladeteils (26) des Fahrzeugs befindet, auf den der lasttragende Gegenstand geladen werden soll, und wobei sich während der Bewegung des Fahrzeugs der Ladeteil unter den lasttragenden Gegenstand bewegt.

8. Verfahren nach Anspruch 7, wobei das vorbestimmte Niveau L, das zum Wechsel in den passiven Betriebsmodus des Zylinders definiert wurde, ein Niveau ist, bei dem sich eine Unterkante (24) eines angehobenen Teils des lasttragenden Gegenstands oberhalb des Niveaus der Ebene eines Ladeteils (26) des Fahrzeugs befindet, auf den der lasttragende Gegenstand geladen werden soll, und wobei sich während der Bewegung des Fahrzeugs der Ladeteil unter den lasttragenden Gegenstand bewegt.

9. Verfahren nach Anspruch 7 oder 8, wobei während der Bewegung des Fahrzeugs in Richtung des lasttragenden Gegenstands das Verfahren Folgendes umfasst:
- Beurteilen der Position des lasttragenden Gegenstands in Bezug auf das Fahrzeug,
- Vergleichen der Position mit einer vorbestimmten Position in Bezug auf das Fahrzeug, und wenn der lasttragende Gegenstand die vorbestimmte Position erreicht hat,
- Ändern des Betriebsmodus des Zylinders vom passiven Betriebsmodus zum aktiven Betriebsmodus, und
- Beenden des Ladens des lasttragenden Gegenstands.

## Revendications

1. Agencement de levage à crochet (2) pour charger un objet porteur de charge (4) sur un véhicule (6), et structuré pour être monté sur le véhicule, l'agencement de levage à crochet (2) comprenant :
- un bras mobile (8) agencé pour pivoter autour d'un axe parallèle au plan du châssis du véhicule, à partir d'une première position, où un premier élément de mise en prise (10), fixé au bras mobile (8), est structuré pour être mis en prise avec un second élément de mise en prise (12) fixé à l'objet porteur de charge (4), vers une seconde position, correspondant à une position où un objet porteur de charge mis en prise (4) est chargé entièrement sur le véhicule (6),
- au moins un vérin hydraulique à double effet (14) fixé au bras mobile (8), le vérin (14) pouvant fonctionner dans un mode de fonctionnement actif, dans lequel la tige de piston du vérin commande le déplacement du bras mobile (8), et dans un mode de fonctionnement passif, dans lequel le bras mobile (8) commande le déplacement de la tige de piston du vérin (14),
- un système de capteur (16) configuré pour déterminer des positions du bras mobile (8) et/ou de l'objet porteur de charge (4) par rapport au véhicule (6), et pour déterminer un signal de position (18) en fonction de celui-ci,
- un système de commande (20) configuré pour recevoir ledit signal de position (18), et pour déterminer et générer des signaux de commande (22) commandant le fonctionnement du vérin (14), et du véhicule (6),
et dans lequel ledit système de commande (20) est configuré pour, pendant le chargement d'un objet porteur de charge (4), déterminer, sur la base du signal de position (18), qu'une partie prédéterminée (24) de l'objet porteur de charge (4) a été soulevée plus haut qu'un niveau prédéterminé L défini pour le mode de fonctionnement passif du vérin (14), et, en réponse à l'objet porteur de charge (4) ayant été soulevé plus haut que ledit niveau prédéterminé L, le système de commande (20) est en outre configuré pour générer des signaux de commande (22) pour changer le mode de fonctionnement du vérin (14) d'un mode de fonctionnement actif à un mode de fonctionnement passif, et vers le véhicule (6) pour déplacer le véhicule (6) vers l'objet porteur de charge (4), de telle sorte que ledit déplacement du véhicule (6) déplace l'objet porteur de charge (4) sur le véhicule (6), **caractérisé en ce que** ledit niveau prédéterminé L défini pour passer en mode de fonctionnement passif du vérin est un niveau où un bord inférieur (24) d'une partie soulevée de l'objet porteur de charge (4) est au-dessus du niveau du plan d'une partie de chargement (26) du véhicule (6) au niveau de laquelle l'objet porteur de charge (4) doit être chargé, et dans lequel, pendant le déplacement du véhicule (6), ladite partie de chargement (26) se déplace au-dessous dudit bord inférieur (24) de la partie soulevée dudit objet porteur de charge (4).

2. Agencement de levage à crochet (2) selon la revendication 1, dans lequel, pendant ledit mouvement du véhicule (6) vers l'objet porteur de charge (4), le système de commande (20) est en outre configuré pour évaluer la position de l'objet porteur de charge (4) par rapport au véhicule (6), et pour comparer la position à une position prédéterminée par rapport au véhicule (6), et dans lequel, lorsque l'objet porteur de charge (4) a atteint ladite position prédéterminée, le système de commande (20) est configuré pour changer le mode de fonctionnement du vérin (14) du mode de fonctionnement passif au mode de fonctionnement actif, et pour terminer le chargement de l'objet porteur de charge (4).

3. Agencement de levage à crochet (2) selon la revendication 2, dans lequel ladite position prédéterminée de l'objet porteur de charge (4) pour passer en mode de fonctionnement actif du vérin (14) est une position où l'objet porteur de charge (4) est sur le point de quitter complètement le sol.

4. Agencement de levage à crochet (2) selon la revendication 3, dans lequel ladite position indiquant que l'objet porteur de charge (4) est sur le point de quitter complètement le sol est définie par un ou plusieurs parmi l'angle du bras mobile (8), des données d'image représentant l'objet porteur de charge (4) et sa position par rapport au sol, et la position relative de l'objet porteur de charge (4) par rapport à un point de référence sur le véhicule (6), comme des rouleaux arrière.

5. Agencement de levage à crochet (2) selon l'une quelconque des revendications 1 à 4, dans lequel, dans le mode de fonctionnement passif, l'hydraulique du vérin à double effet (14) est réglée pour être dans un mode de régénération dans lequel la chambre de piston respective et la chambre de tige de piston du vérin (14) sont interconnectées et en outre connectées à un réservoir du système hydraulique par l'intermédiaire, par exemple, de vannes de commande d'écoulement.

6. Véhicule (6) comprenant un agencement de levage à crochet (2) selon l'une quelconque des revendications 1 à 5.

7. Procédé d'un agencement de levage à crochet (2) pour charger un objet porteur de charge (4) sur un véhicule (6), et structuré pour être monté sur le véhicule, ou procédé d'un véhicule (6) comprenant un agencement de levage à crochet (2), l'agencement de levage à crochet (2) comprenant :
- un bras mobile (8) agencé pour pivoter autour d'un axe parallèle au plan du châssis du véhicule, à partir d'une première position, où un premier élément de mise en prise (10), fixé au bras mobile (8), est structuré pour être mis en prise avec un second élément de mise en prise (12) fixé à l'objet porteur de charge (4), vers une seconde position, correspondant à une position où un objet porteur de charge mis en prise (4) est chargé entièrement sur le véhicule (6),
- au moins un vérin hydraulique à double effet (14) fixé au bras mobile, le vérin pouvant fonctionner dans un mode de fonctionnement actif, dans lequel la tige de piston du vérin commande le déplacement du bras mobile (8), et dans un mode de fonctionnement passif, dans lequel le bras mobile (8) commande le déplacement de la tige de piston du vérin (14),
- un système de capteur (16) configuré pour déterminer des positions du bras mobile (8) et/ou de l'objet porteur de charge (4) par rapport au véhicule (6), et pour déterminer un signal de position (18) en fonction de celui-ci,
- un système de commande (20) configuré pour recevoir ledit signal de position (18), et pour déterminer et générer des signaux de commande (22) commandant le fonctionnement du vérin (14), et du véhicule (6),
dans lequel le procédé comprend les étapes consistant à :
- déterminer, pendant le chargement d'un objet porteur de charge, sur la base du signal de position, qu'une partie prédéterminée de l'objet porteur de charge a été soulevée plus haut qu'un niveau prédéterminé L défini pour le mode de fonctionnement passif du vérin, et, en réponse à cela, que l'objet porteur de charge a été soulevé plus haut que ledit niveau prédéterminé L,
- générer des signaux de commande pour changer le mode de fonctionnement du vérin d'un mode de fonctionnement actif à un mode de fonctionnement passif,
- générer des signaux de commande vers le véhicule pour déplacer le véhicule vers l'objet porteur de charge, et
- déplacer le véhicule de telle sorte que l'objet porteur de charge se déplace sur le véhicule,
**caractérisé en ce que** ledit niveau prédéterminé L défini pour passer en mode de fonctionnement passif du vérin est un niveau où un bord inférieur (24) d'une partie soulevée de l'objet porteur de charge est au-dessus du niveau du plan d'une partie de chargement (26) du véhicule au niveau de laquelle l'objet porteur de charge doit être chargé, et dans lequel pendant le mouvement du véhicule, ladite partie de chargement se déplace au-dessous dudit objet porteur de charge.

8. Procédé selon la revendication 7, dans lequel ledit niveau prédéterminé L défini pour passer en mode de fonctionnement passif du vérin est un niveau où un bord inférieur (24) d'une partie soulevée de l'objet porteur de charge est au-dessus du niveau du plan d'une partie de chargement (26) du véhicule au niveau de laquelle l'objet porteur de charge doit être chargé, et dans lequel, pendant le mouvement du véhicule, ladite partie de chargement se déplace au-dessous dudit objet porteur de charge.

9. Procédé selon la revendication 7 ou 8, dans lequel, pendant ledit déplacement du véhicule vers l'objet porteur de charge, le procédé comprend les étapes consistant à :
- évaluer la position de l'objet porteur de charge par rapport au véhicule,
- comparer la position à une position prédéterminée par rapport au véhicule, et dans lequel, lorsque l'objet porteur de charge a atteint ladite position prédéterminée,
- faire passer le mode de fonctionnement du vérin du mode de fonctionnement passif au mode de fonctionnement actif, et
- terminer le chargement de l'objet porteur de charge.
